# EUROPEAN PATENT APPLICATION

(11) **EP 2 284 361 A2**
(43) Date of publication of application: **16.02.2011**
(21) Application number: 10170842.8
(22) Date of filing: 27.07.2010
(51) Int. Cl.: F01D 5/00, F01D 5/06

(54) **Developments in or relating to drum rotors**

(30) Priority: 11.08.2009 GB 0913924
(71) Applicant: Rolls-Royce plc, London SW1E 6AT (GB)
(72) Inventor: Tuppen, Stephen, Swadlincote, Derbyshire DE11 9LD (GB); Clark, Daniel, Derby, Derbyshire DE56 1TG (GB)
(74) Representative: Roberts, Nicholas John

(57) **Abstract**

A method of replacing a integrally bladed rotor section in a one-piece drum rotor, the method comprising removing the integrally bladed rotor section, replacing the integrally bladed rotor section with a replacement rotor section, and joining the replacement rotor section to the drum rotor by diffusion bonding under an axial contact pressure exerted between one or more respective pairs of bonding surfaces on the new rotor section and the drum rotor.

## Description

The present invention relates to a method of replacing a integrally bladed rotor section forming part of a one-piece drum rotor. The invention may be used to repair a damaged integrally bladed rotor section, to remedy manufacturing defects in a particular integrally bladed rotor section, or to provide a "retro-fit" modification of a integrally bladed rotor section in an existing rotor, for example to introduce a design modification. An aspect of the invention relates to original manufacture of a drum rotor by fabrication.

In the continuing drive to reduce weight in gas turbines, particularly in aerospace applications, there has been a move towards using integrally bladed rotor technology to form integrally bladed disks. A series of integrally bladed rotors may be fusion welded to one another to form a one-piece drum rotor. Integrally bladed rotor manufacture is relatively expensive, and therefore the resulting one-piece drum rotors tend to have a particularly high unit cost. Consequently, where a drum rotor suffers damage or other defect, such as manufacturing defects, it is often more cost-effective to modify or repair the drum rotor rather than scrap the drum rotor.

In practical terms, modification or repair of the drum rotor may require sectioning and removal of one or more defective integrally bladed rotor sections, which are then replaced by new, replacement integrally bladed rotor sections. By "integrally bladed rotor section" is meant a bladed section of the rotor i.e. an axial section of the rotor which incorporates one or more rows of integral rotor blades. Although the term "integrally bladed rotor" generally refers to a bladed disk, the term is used in this specification to embrace similar components, such as bladed rings or drums.

The new integrally bladed rotor sections are typically joined to the existing drum rotor using electron beam welding, but the electron beam welding process carries with it a number of disadvantages. The beam alters the cast microstructure of the material, and the material properties and stresses are also affected by an uneven thermal history around the circumference of the join and the variation in contraction against varying constaints. These and other factors make the rotor liable to strain-age cracking (particularly in the case of nickel-based superalloys) and embrittlement which impact upon the life cycle of the rotor. In addition, in order to limit the residual stress in the rotor caused by electron beam welding, the rotor must typically be subjected to a post-weld thermal treatment, which is costly. The weld profile created by electron beam welding may also be undesirable.

It is an object of the present invention to seek to provide an improved method of replacing a integrally bladed rotor section in a one-piece drum rotor.

According to the present invention, there is provided a method of securing a rotor section in a one-piece drum rotor, the method comprising providing a rotor section, and joining the rotor section to the drum rotor by diffusion bonding under an axial contact pressure exerted between one or more respective pairs of bonding surfaces on the new rotor section and the drum rotor.

The rotor section may be a replacement rotor section and the method further comprising the step of removing a prior rotor section from the drum rotor and replacing the prior rotor section with the replacement rotor section.

The rotor section may be annular and may comprise a replacement integrally bladed rotor. The rotor section may comprise a replacement integrally bladed rotor and one or more spacer elements arranged axially in-between the replacement integrally bladed rotor and the drum rotor so that each spacer element is thus adjacent to either the replacement integrally bladed rotor, the drum rotor or another spacer element, each spacer element further being joined to said adjacent spacer element, integrally bladed rotor or drum rotor by diffusion bonding under an axial contact pressure exerted between a respective pair of bonding surfaces on the spacer element and said adjacent integrally bladed rotor, drum rotor or spacer element. The rotor section may comprise a plurality of integrally bladed rotors so that each spacer element may be adjacent to any one of the replacement integrally bladed rotors.

The drum rotor and replacement rotor section may be sandwiched together thereby simultaneously to exert said axial contact pressure between each pair of bonding surfaces.

The method may comprise application of a radial constraining pressure along at least part of the rotor for controlling radial deformation of the drum rotor, for example buckling or compression-bulging of the rotor.

In particular, the method may comprise:
i) interposing a powdered metal in-between one or more of the respective pairs of bonding surfaces; and
ii) locally heating the powdered metal under said axial contact pressure to a sintering temperature, below the relevant melting temperature of the drum rotor, thereby to sinter the powdered metal and promote said diffusion bonding.

In one embodiment, the powdered metal is mixed with a binder and step i) comprises applying the resulting mixture directly to a bonding surface. In an alternative embodiment, the powdered metal is in the form of an annular pre-form insert and step i) comprises inserting the pre-form insert between the bonding surfaces.

The powdered metal may be a powder or a partially consolidated powder metal compact.

The pre-form insert may have an annular radius which is greater than the annular radius of the respective bonding surfaces in order to allow for a predetermined maximum radial shrinkage of the pre-form insert during step ii).

The respective bonding surfaces may be provided with one or more co-operative locating features for locating the new section and drum rotor in a preferential, relative axial and/or circumferential alignment prior to said diffusion bonding.

The local heating may be provided by one or more induction coils. There may be an in-process rotation or oscillation of the assembly of the rotor section and the drum relative to the induction coils by rotating either the coils or the assembly so as to even out temperatures to accommodate any variation in heating due to the location of the coil connections (e.g. power and water cooling inputs/outputs).

The local heating may be performed in a vacuum less than or equal to 1x10⁻⁵ Torr. The vacuum may be applied locally to the bonding surfaces. Where a local vacuum is applied, the vacuum sealing surfaces may be cooled. Alternatively, the entire component may be subjected to the vacuum.

The powdered metal may be maintained at a temperature of 900 - 1000°C for 1 - 2 hours during the sintering cycle. The bonding surfaces and the adjacent portions of the replacement rotor section and the drum rotor may be heated to reduce any quenching effect caused by the rotor section and the drum rotor, if cold, during the diffusion bonding process. The heating could be supplied continuously or, alternatively, as a series of heat pulses to allow heat dissipation. In one embodiment, a travelling hot spot could be provided. In particular, a travelling hot spot may be useful where access to rotor section and the drum rotor is restricted.

In one exemplary embodiment, the axial contact pressure exerted between the bonding surfaces is up to 10 MPa.

Though not essential, the drum rotor and new section may each be oriented such that the nominal centreline of the rotor is substantially vertical during diffusion bonding.

The drum rotor and the new section may each be formed from either a titanium-based or nickel-based super-alloy.

The method of replacing a integrally bladed rotor section according to the invention may in particular be used in a method of repairing or modifying a one-piece drum rotor in order to replace a damaged or defective integrally bladed rotor section.

According to another aspect of the present invention, there is provided a method of fabricating a one-piece drum rotor, the method comprising joining two rotor sections of the drum rotor by diffusion bonding under an axial contact pressure exerted between respective bonding surfaces on the rotor sections.

Embodiments of the invention will now be described by way of example, with reference to the accompanying drawings, in which:
Figure 1 is a sectional view along the centreline of a one-piece drum rotor;
Figure 2 is a sectional view corresponding to Figure 1, but with a integrally bladed rotor section removed;
Figure 3 is an exploded sectional view of a one-piece drum rotor showing introduction of a replacement integrally bladed rotor to be joined to the drum rotor;
Figure 4 is a sectional view illustrating diffusion bonding of the replacement integrally bladed rotor and drum rotor shown in Figure 3;
Figure 5 is a sectional view corresponding to Figure 4, showing the drum rotor following diffusion bonding of the replacement integrally bladed rotor;
Figure 6 is a sectional view illustrating diffusion bonding of a separate spacer element in-between the replacement integrally bladed rotor and the drum rotor; and

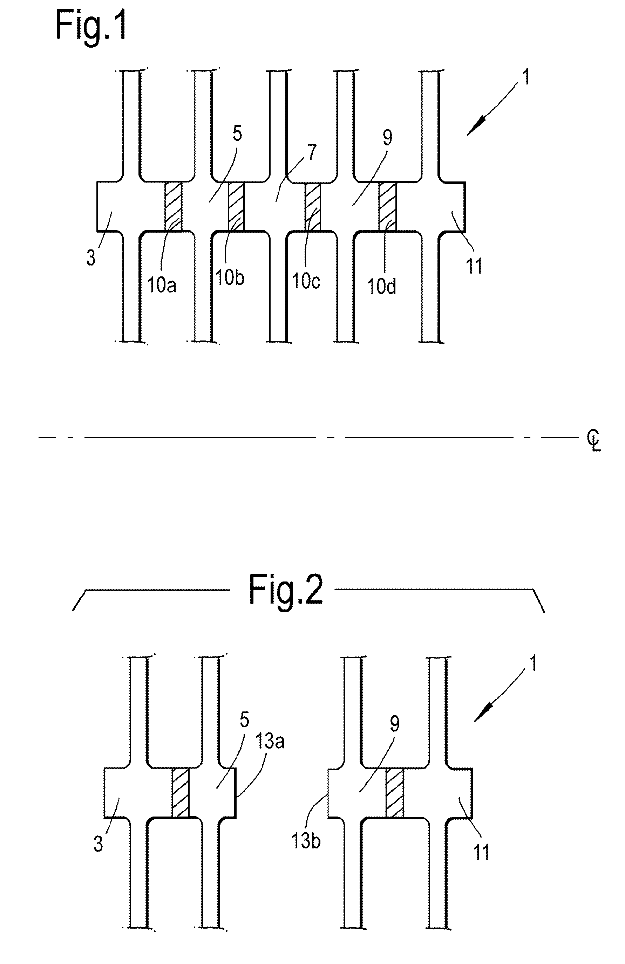

Figure 1 shows part of a one-piece drum rotor 1 having a nominal centreline (CL).

The drum rotor 1 comprises a plurality of integrally bladed rotors 3, 5, 7, 9, 11 which are joined together by fusion welds 10a, 10b, 10c, 10d (the reference numerals 10a, 10b, 10c and 10d are intended to represent the heat affected zones associated with the respective fusion welds; for clarity purposes, the scale of these heat affected zones is greatly exaggerated in Figure 1).

The drum rotor 1 may be formed from any suitable alloy, including titanium-based or nickel-based super alloys.

As previously mentioned, it may be desirable during the life cycle of the drum rotor 1 to replace one or more of the integrally bladed rotors 3, 5, 7, 9, 11, for example because the integrally bladed rotor is damaged or is otherwise defective.

Figures 2 to 5 illustrate replacement of the integrally bladed rotor 7 in accordance with the present invention.

Firstly, a integrally bladed rotor section is removed from the drum rotor 1 using conventional techniques, as illustrated in Figure 2. The integrally bladed rotor section incorporates the integrally bladed rotor 7, as well as the fusion welds 10b and 10c either side of the integrally bladed rotor 7. Removal of the integrally bladed rotor section thus removes all of the original weld material and each heat affected zone 10b and 10c and creates two bonding surfaces 13a, 13b on the drum rotor 1; the bonding surfaces 13a, 13b are illustrated as being generally planar in Figure 2, but this is not essential.

The bonding surfaces 13a, 13b should be as clean as possible, and if required may be chemically cleaned using conventional techniques. The bonding surfaces 13a and 13b may also be smoothed or polished to remove asperities, as required.

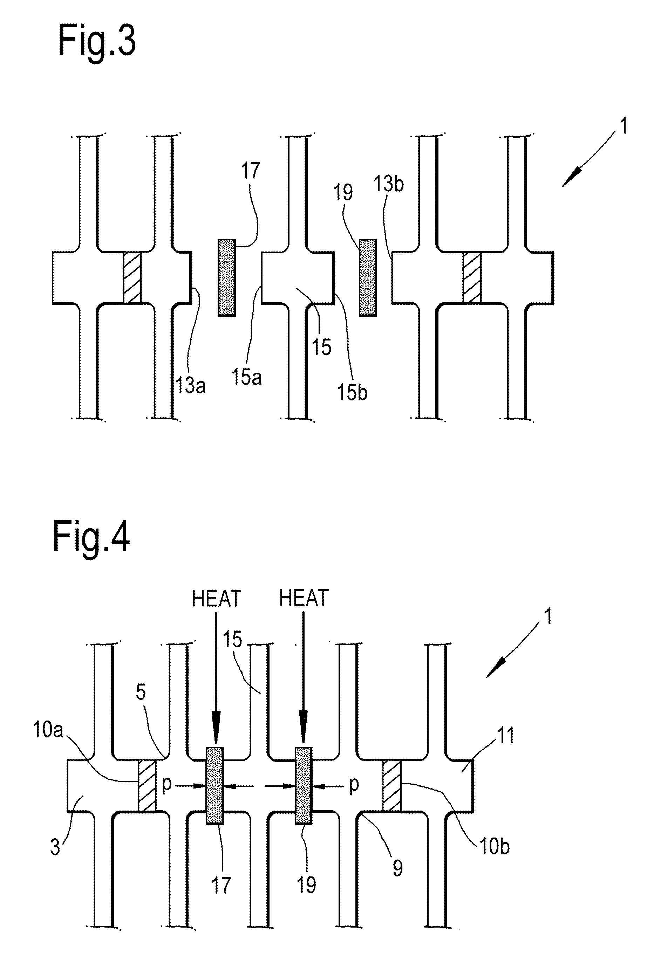

Following removal of the integrally bladed rotor section, a replacement rotor section, in this case a replacement integrally bladed rotor 15, is joined to the drum rotor 1 by diffusion bonding, as illustrated in Figures 3 and 4.

The replacement integrally bladed rotor 15 may correspond in composition and/or configuration to the integrally bladed rotor 7. Alternatively, the replacement integrally bladed rotor 15 may have a different configuration, or be formed from a different material to the removed integrally bladed rotor 7, particularly in the case where replacement of the integrally bladed rotor 7 is being carried out as part of a "retro fit" modification of the drum rotor 1.

The diffusion bonding process is illustrated in Figures 3 and 4. Powdered metal in the form of a first preform powder ring 17 is interposed between the bonding surface 13a on drum rotor 1 and a corresponding bonding surface 15a on integrally bladed rotor 15. Similarly, powdered metal in the form of a second preform powder ring 19 is interposed between the bonding surface 13b on the drum rotor 1 and a corresponding bonding surface 15b on the integrally bladed rotor 15.

The bonding surfaces 15a and 15b may be prepared in similar manner to bonding surfaces 13a, 13b using conventional techniques such as chemical cleaning and polishing to remove asperites etc.

The powdered metal used to form the preformed powder ring 17 and 19 may be any suitable sinterable metal used in powder metallurgy such as iron, copper, nickel, beryllium, chromium, cobalt, molybdenum, stainless steel, tantalum, titanium, tungsten, and suitable alloys thereof. Preferably, the powdered metal has a composition which is the same as or similar to the composition of the replacement integrally bladed rotor 15 and/or the drum rotor 1. The powdered metal may be formed using conventional processes. A particularly suitable process is the Plasma Rotating Electrode Process (PREP). A conventional inert gas atomisation process may also be used; however, other processes may be used provided they are suitable for producing clean, dry, unoxidised, spherical powder with good packing characteristics and no, or minimal, internal porosity.

The size of powdered metal particles may vary, and blends of particle sizes may be used, but particle sizes less than 100 microns are considered to be particularly suitable.

The preform powder ring 17 and 19 may be partially consolidated, and may be formed via conventional rolling or cold compression. Alternatively the perform ring 17 and 19 may be fully consolidated.

Referring now to Figure 4, each of the powder rings 17, 19 is locally heated under an axial contact pressure P between the respective bonding surfaces 13a, 15a and 13b, 15b to sinter the powder preform rings and promote diffusion bonding across the bonding surfaces 13a, 15a, 15b and 13b.

The various bonding parameters may be controlled in accordance with the specific composition of the preform rings 17, 19 and the integrally bladed rotors 5, 9 and 15. For integrally bladed rotors formed from titanium and nickel based super alloys, suitable joints may be obtained using bonding temperatures of 900 to 1000°C for one to two hours, under an axial contact pressure up to 10MPa. Temperatures outside this range may be suitable. For example, a temperature lower than 900° may be adequate if the axial contact pressure is high, or is maintained for a longer time.

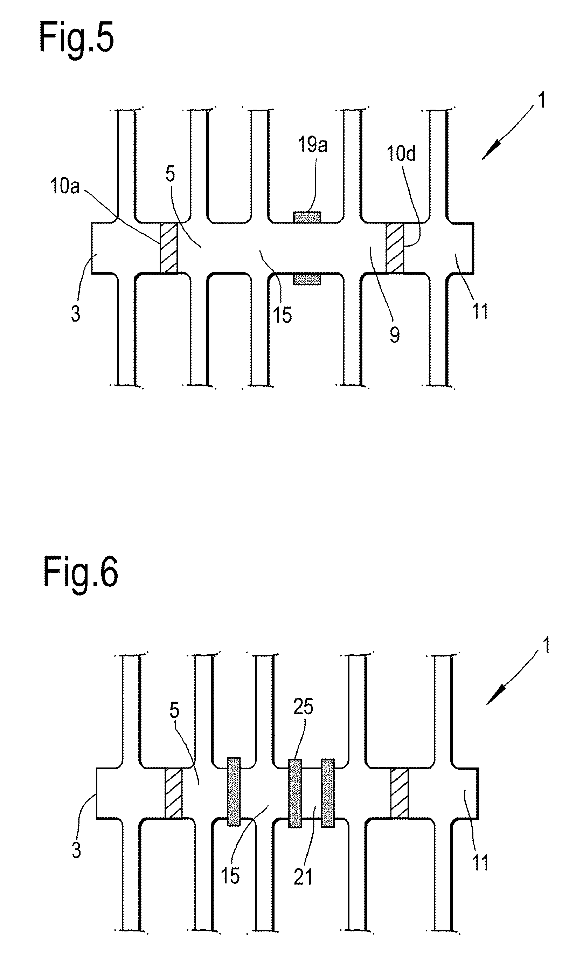

In general, the sintering temperature required to sinter the powdered metal is less than the melting temperature of the replacement integrally bladed rotor and drum rotor, so that the primary bonding mechanism is inter-atomic diffusion, either solid state diffusion or liquid phase diffusion, across the bonding surfaces. Thus, the finished joint will have a high integrity and will not generally exhibit the heat affected zones, and the grain coarsening within these zones, associated with fusion welding techniques such as electron beam welding (see Figure 5).

During the sintering cycle, the preform rings 17, 19 may exhibit shrinkage, which will in general vary according to the residual porosity in the preform rings (the residual porosity will itself depend upon the process used to form the powdered metal, with gas atomisation processes tending to result in higher residual porosities than the PREP process). In order to ensure full "wetting" of the bonding surfaces 13a, 15a, 15b and 13b, the annular radii of the preform rings 17, 19 are thus dimensioned to exceed the annular radii of the bonding surfaces 13a, 15a, 15b and 13b accordingly. Depending upon the actual shrinkage rate during the sintering cycle, excess material 19a may be left around the circumference of the joint (see Figure 5). The excess material 19a may act as a stress riser, in which case it may be desirable to remove the excess material e.g. by subsequent machining.

It is envisaged that the preform rings 17, 19 may additionally act as spacer elements between the replacement integrally bladed rotor 15 and the drum rotor, for example to off-set any difference in the relative axial lengths of the replacement integrally bladed rotor 15 and the removed integrally bladed rotor section (the latter incorporating heat affected zones 10b and 10c).

One or more solid spacer elements may also be provided as part of the replacement rotor section as required, inserted between the replacement integrally bladed rotor 15 and the drum rotor 1. Figure 6 shows a single, solid spacer element 21 inserted between the replacement integrally bladed rotor 15 and the drum rotor 1. The spacer element 21 is joined to the replacement integrally bladed rotor 15 and the drum rotor 1 by diffusion bonding in the manner described above, using an additional preform powder ring 25 in- between the replacement integrally bladed rotor 15 and the spacer element 21 (see Figure 6).

The various bonding surfaces may be provided with one or more locating features for cooperative engagement to locate the replacement integrally bladed rotor 15 in preferential, relative axial and/or circumferential alignment with the remainder of the drum rotor 1. Corresponding locating features may be provided on the preform powder inserts 17, 19 and/or 25 as appropriate. Suitable locating features may include abutments, scallop features and chamfers; various other suitable locating features will be apparent to the skilled person.

The above-mentioned local heating may be provided by means of an induction coil, preferably in the form of a graphite-lined induction ring, which may conveniently be configured to provide local heating around the full circumference of the rotor in the region of the interface between bonding surfaces. Preferably, the induction coil is water cooled. An induction coil should be provided in the region of each pair of bonding surfaces, so that for example three separate induction coils would be required to provide suitable local heating in the case of the arrangement shown in Figure 6. Although the use of an induction coil is considered to be particularly suitable, other local heating methods may however be used, for example resistance-heated thermal blankets, particularly where there is sufficient access to the interface between bonding surfaces.

The axial contact pressure between the various bonding surfaces can conveniently be applied and maintained simultaneously by clamping the drum rotor 1 and replacement integrally bladed rotor 15 together in a suitable press. In this manner, the drum rotor and replacement integrally bladed rotor are sandwiched together to generate the axial contact pressure at the various bonding surfaces. Additional tooling may be provided for exerting a radial isostatic constraining pressure on at least part of the drum rotor 1, and possibly the entire length of the drum rotor 1, in order to prevent or to control buckling, "compression bulging" or other radial deformation of the drum rotor during application of the axial contact pressure required for diffusion bonding. The constraining pressure may be applied on the inside and/or outside of the drum rotor using suitable additional tooling. Suitable sensors may be used to provide feedback for corresponding closed-loop control of the axial contact pressure and/or radial isostatic constraining pressure as appropriate.

In one embodiment, the compression bulging can be controlled by regulating the bonding pressure. By appropriately controlling the bonding pressure, the radial thickness of the joint may be increased. Increased radial thickness of the joint can reduce joint stress and can allow for the joint to be machined or etched without reducing the radial thickness of the joint below the radial thickness prior to joining. The shortening of the joined drum rotor 1, spacer element 21 and integrally bladed rotor 15 which occurs as a result of bulging may be accommodated by adding length to the replacement integrally bladed rotor 15 and/or the spacer element 21 prior to joining.

During diffusion bonding of the replacement rotor section to the drum rotor, the drum rotor is preferably orientated such that its nominal centreline is substantially vertical, to limit the effect of gravity on axial misalignment of the replacement integrally bladed rotor with the drum rotor.

Alternative powder preform inserts other than a preform ring may be used. For example, the powdered metal may cold-rolled into a pre-formed foil for insertion between bonding surfaces.

The use of a powder pre-form insert is not considered to be essential and the powdered metal may be interposed between bonding surfaces using any suitable method. For example, the powdered metal may be mixed with a suitable sacrificial binder and applied directly to one or both of respective bonding surfaces. Alternatively, the powdered metal may be applied using a suitable cold metal spray process. A solid space element may be used to offset any loss in axial dimension not readily compensated for by the axial thickness of the powdered metal applied to the bonding surfaces.

Although in the embodiment described the one-piece drum rotor 1 is formed from a plurality of joined integrally bladed rotors, it is envisaged that the invention might equally be used for removing a integrally bladed rotor section from an integrally formed, one-piece drum rotor i.e. a drum rotor which has initially been formed as a single piece, rather than by fusion welding together separate integrally bladed rotors.

It is envisaged that the replacement rotor section will comprise a integrally bladed rotor, but this is not strictly essential. For example, the replacement rotor section may comprise one or more discs, rings or drums carrying separately-formed rotor blades (in which case the resulting drum rotor will no longer be a one-piece drum rotor).

In a variant of the invention, the diffusion bonding process may be employed in the original manufacture of a one-piece drum rotor to join rotor sections of the drum rotor. In such applications, the method of the invention aids assembly of the component.

## Claims

1. A method of securing a rotor section (3, 5, 7, 9, 11) in a one-piece drum rotor (1), **characterised in that** the method comprising providing a rotor section (3, 5, 7, 9, 11), and joining the rotor section to the drum rotor by diffusion bonding under an axial contact pressure exerted between one or more respective pairs of bonding surfaces (13a, 13b) on the rotor section and the drum rotor.

2. A method according to claim 1, wherein the rotor section is or comprises an integrally bladed rotor.

3. A method according to claim 1, wherein the rotor section is a replacement rotor section and the method further comprising the step of removing a prior rotor section from the drum rotor and replacing the prior rotor section with the replacement rotor section.

4. A method according to any preceding claim, wherein the rotor section comprises a replacement integrally bladed rotor (15) and one or more spacer elements (17, 19) arranged axially in-between the replacement integrally bladed rotor and the drum rotor so that each spacer element is thus adjacent to either the replacement integrally bladed rotor, the drum rotor or another spacer element, each spacer element further being joined to said adjacent spacer element, integrally bladed rotor or drum rotor by diffusion bonding under an axial contact pressure exerted between a respective pair of bonding surfaces on the spacer element and said adjacent integrally bladed rotor, drum rotor or spacer element.

5. A method according to claim 4, wherein the rotor section comprises a plurality of integrally bladed rotors so that each spacer element may be adjacent to any one of the replacement integrally bladed rotors.

6. A method according to any preceding claim, wherein the drum rotor and rotor section are sandwiched together thereby simultaneously to exert said axial contact pressure between each pair of bonding surfaces.

7. A method according to claim 6, additionally comprising the application of a radial constraining pressure along at least part of the rotor for controlling radial deformation of the drum rotor.

8. A method according to any preceding claim, further comprising:
i) interposing a powdered metal in-between one or more respective pairs of bonding surfaces; and
ii) locally heating the powdered metal under said axial contact pressure to a sintering temperature, below the relevant melting temperature of the drum rotor, thereby to sinter the powdered metal and promote said diffusion bonding.

9. A method according to claim 8, wherein the powdered metal is mixed with a binder and step i) comprises applying the resulting mixture directly to a bonding surface.

10. A method according to claim 8, wherein the powdered metal is in the form of an annular pre-form insert and step i) comprises inserting the pre-form insert between the bonding surfaces.

11. A method according to claim 10, wherein the pre-form insert has an annular radius which is greater than the annular radius of the respective bonding surfaces in order to allow for a predetermined maximum radial shrinkage of the pre-form insert during step ii).

12. A method according to any preceding claim, wherein respective bonding surfaces are provided with one or more co-operative locating features for locating the new section and drum rotor in a preferential, relative axial and/or circumferential alignment prior to said diffusion bonding.

13. A method according to any of claims 8 to 12, wherein in step ii) the powdered metal is maintained at a temperature of 900 - 1000°C for 1 - 2 hours.

14. A method according to any preceding claim, wherein the axial contact pressure exerted between the bonding surfaces is up to 10 MPa.

15. A method according to any preceding claim wherein, during said diffusion bonding, the drum rotor and new rotor section are each oriented such that the nominal centreline of the drum rotor is substantially vertical.
